# EUROPEAN PATENT SPECIFICATION

(11) **EP 3 477 900 B1**
(45) Date of publication and mention of the grant of the patent: **14.10.2020**
(21) Application number: 18194233.5
(22) Date of filing: 13.09.2018
(51) Int. Cl.: H04L 25/02, H04L 27/26

(54) **CHANNEL ESTIMATION METHOD AND CHANNEL ESTIMATION CIRCUIT**
KANALSCHÄTZUNGSVERFAHREN UND KANALSCHÄTZUNGSSCHALTUNG
PROCÉDÉ D'ESTIMATION DE CANAL ET CIRCUIT D'ESTIMATION DE CANAL

(30) Priority: 19.10.2017 CN 201710980158
(43) Date of publication of application: 01.05.2019
(73) Proprietor: ALi Corporation, Hsinchu City 300 (TW)
(72) Inventor: YANG, Yong, Shanghai 200233 (CN)
(74) Representative: Viering, Jentschura & Partner mbB Patent- und Rechtsanwälte

(56) References cited:
- EP-A1- 2 362 596
- WO-A1-2010/139248
- WO-A2-2006/062299
- Peter Hoeher ET AL: "Pilot-Symbol-Aided Channel Estimation in Time and Frequency", Proc. IEEE Global Telecommunications Conference (GLOBECOM '97), Communication Theory Mini-Conference, 1 January 1997 (1997-01-01), pages 90-96, XP055005421, DOI: 10.1007/978-1-4615-6231-3_20 Retrieved from the Internet: URL:http://citeseerx.ist.psu.edu/viewdoc/s ummary?doi=10.1.1.28.4177 [retrieved on 2011-08-23]

## Description

### FIELD OF THE INVENTION

The present disclosure relates to a channel estimation method and a channel estimation circuit capable of dynamically adjusting the number of filter taps, and more particularly to a channel estimation method and a channel estimation circuit that can dynamically adjust the number of filter taps based on the index of each subcarrier.

### BACKGROUND OF THE INVENTION

In the field of wireless communication, channel estimation is one of the key factors to system reliability. One of common channel estimation technologies measures a known pilot signal among the transmission signals, thus obtaining a fading feature of the entire transmission channel. Taking orthogonal frequency division multiplexing (OFDM) system for example, the channel estimation method firstly obtains a channel estimation result of each pilot signal, then performs time-domain filtering on the channel estimation results of the pilot signals, and finally performs frequency-domain filtering to the time-domain filtered results, thereby obtaining the channel estimation result of the entire transmission channel. A filter with a greater number of taps may be used during the frequency filtering to decrease the signal band interference. WO 2010/139248 A1 discloses a channel estimation method applicable to a receiver of an OFDM system for receiving carrier signals via a plurality of subcarriers. The number of filter taps for the frequency domain filter is chosen based on the maximum delay spread of the transmission channel.

However, in the OFDM system, since subcarriers close to the boundary have less usable information, if a filter with great filter taps is used, serious edge effect may occur. On the other hand, if a filter with few filter taps is used for maintaining edge performance, the estimation result can however be more easily influenced by channel interference. Alternatively, virtual pilots may be generated by prediction, and be used to pad the lacking information the edge subcarriers need for filtering. However, the prediction method is often faced with the problems of inaccuracy and complex prediction models. Since conventional methods have relatively high likelihood of producing incorrect channel estimation results, finding the way to dynamically adjust the number of filter taps, and then to find balance between channel interference and edge effect are issues that remain to be addressed.

### SUMMARY OF THE INVENTION

According to the present invention a channel estimation method as defined in claim 1 is provided. A channel estimation circuit according to the present invention is defined in claim 9. The dependent claims show some examples of such a method a circuit, respectively. Accordingly, an embodiment of the present disclosure provides a channel estimation method and circuit capable of dynamically adjusting the number of filter taps, and particularly a channel estimation method and circuit that can dynamically adjust the number of filter taps according to an index of each subcarrier in a valid section.

To further understand the techniques, means and effects of the present disclosure, the following detailed descriptions and appended drawings are hereby referred to, such that, and through which, the purposes, features and aspects of the present disclosure can be thoroughly and concretely appreciated. However, the appended drawings are provided solely for reference and illustration, without any intention to limit the present disclosure.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 shows a flowchart of a channel estimation method according to an embodiment of the present disclosure.
FIG. 2 is a diagram showing the plurality of subcarriers being divided into multiple valid sections in the channel estimation method in FIG. 1 according to an embodiment of the present disclosure.
FIG. 3 shows a flowchart of determining, according to an index of each subcarrier in each valid section, whether to select one of N predetermined parameters to be the number of filter taps of the subcarrier corresponding to the index in the channel estimation method in FIG. 1.
FIG. 4 shows another flowchart of determining, according to an index of each subcarrier in each valid section, whether to select one of N predetermined parameters to be the number of filter taps of the subcarrier corresponding to the index in the channel estimation method according to an embodiment of the present disclosure.
FIG. 5 shows another flowchart of determining, according to an index of each subcarrier in each valid section, whether to select one of N predetermined parameters to be the number of filter taps of the subcarrier corresponding to the index in the channel estimation method according to an embodiment of the present disclosure.
FIG. 6 is a diagram showing the plurality of subcarriers being divided into multiple valid sections in the channel estimation method in FIG. 5, according to another exemplary embodiment of the present disclosure.
FIG. 7 shows a block diagram of a channel estimation circuit according to an embodiment of the present disclosure.

### DETAILED DESCRIPTION OF THE PREFERRED EMBODIMENTS

Embodiments of a channel estimation method and a channel estimation circuit according to the present disclosure are described herein. Other advantages and objectives of the present disclosure can be easily understood by one skilled in the art from the disclosure. The present disclosure can be applied in different embodiments. Various modifications and variations can be made to various details in the description for different applications without departing from the scope of the present disclosure. The drawings of the present disclosure are provided only for simple illustrations, but are not drawn to scale and do not reflect the actual relative dimensions. The following embodiments are provided to describe in detail the concept of the present disclosure.

Specifically, the channel estimation method and circuit provided in the embodiment of the present disclosure may be applied to a receiver in any OFDM system that receives carrier signals via a plurality of subcarriers. For example, the OFDM system may be a WLAN system, an ISDB-T system, a DVB-T system, a DVB-T2 system or a CMMB system, etc., but the present disclosure is not limited thereto.

In addition, the receiver of the embodiments of the present disclosure may be a WLAN router, a computer, a STB, or a smart TV. However, the implementation of the receiver is not limited in the present disclosure, and a person skilled in the art may design the receiver according to actual requirements or applications. In summary, the receiver of the OFDM system receives an OFDM symbol having a plurality of carrier signals via the plurality of subcarriers. Relevant details on the OFDM system should be well known to those having ordinary skill in the art and thus will be omitted herein.

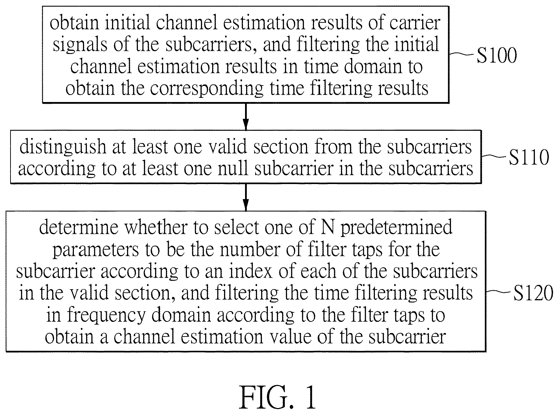

Reference is made to FIG. 1, which shows a flowchart of a channel estimation method according to an embodiment of the present disclosure. After the receiver receives the plurality of carrier signals of a symbol in the OFDM system, in step S100, an initial channel estimation result of the carrier signals in the subcarriers will be obtained, and a time filtering circuit will be used to filter the initial channel estimation results in time domain to obtain the time filtering results of the signals.

Secondly, in step S110, a frequency filtering circuit distinguishes at least one valid section from the subcarriers according to at least one null subcarrier, and the at least one valid section includes multiple subcarriers transmitting carrier signals. If a plurality of valid sections are distinguished, adjacent valid sections would be separated by the at least one null subcarrier, and no null subcarrier would be included in any of the valid sections. The carrier signal may be a pilot signal or a data signal according to different OFDM system specifications, and the null subcarrier in the embodiment refers to a subcarrier that is used as frequency guard band or DC instead of transmitting carrier signals.

Next, in step S120, according to an index of each subcarrier (with carrier signal) in the valid section, it is determined whether to select one of N predetermined parameters to be the number of filter taps for the subcarrier corresponding to the index, and to select the corresponding number of time filtering results according to the number of filter taps to be filtered, thereby obtaining a channel estimation result of the subcarrier. N is an integer greater than 1.

It should be noted that, based on the ordinary knowledge in the art, the channel estimation method of the present disclosure is performed after the OFDM signal is synchronized. Therefore, the OFDM signal including multiple carrier signals received by the receiver of the embodiment may be a synchronized OFDM signal, but the method of synchronizing the OFDM signal by the receiver is not limited in the present disclosure, and a person of ordinary skill in the art may design the receiver according to actual requirements or applications.

In addition, the way of obtaining the initial channel estimation result of each signal in step S100 may be implemented by using an estimation circuit to perform a least square (LS) algorithm and/or a linear smallest mean square error (LMMSE) algorithm, but the present disclosure is not limited thereto. The LS algorithm and the LMMSE algorithm are known by persons of ordinary skill in the art, thus further description thereon will be omitted herein.

In further detail, taking the 802.11a system as an example, since all carrier signals other than frequency guard band and DC in the OFDM signal are all known by the receiver, in step S100, initial channel estimation results of each carrier signal other than frequency guard band and DC can be obtained, and the time filtering results may also be obtained simply by using a low pass filter to remove noises from the initial channel estimation results thereof.

Taking DVB-T system having scattered pilot signals as another example, the method in step S100, performing time filtering to obtain the time filtering results of the carrier signals may be implemented by using a low pass filter to remove noises from the initial channel estimation results of the scattered pilot signals in time domain, thereby obtaining the time filtering results of the scattered pilot signals in each symbol.

In summary, the implementation of the method in step S100 for performing time filtering to the initial channel estimation results of the carrier signals to obtain the time filtering results of the carrier signals is not limited in the present disclosure, and a person skilled in the art may modify its design according to actual requirements or applications.

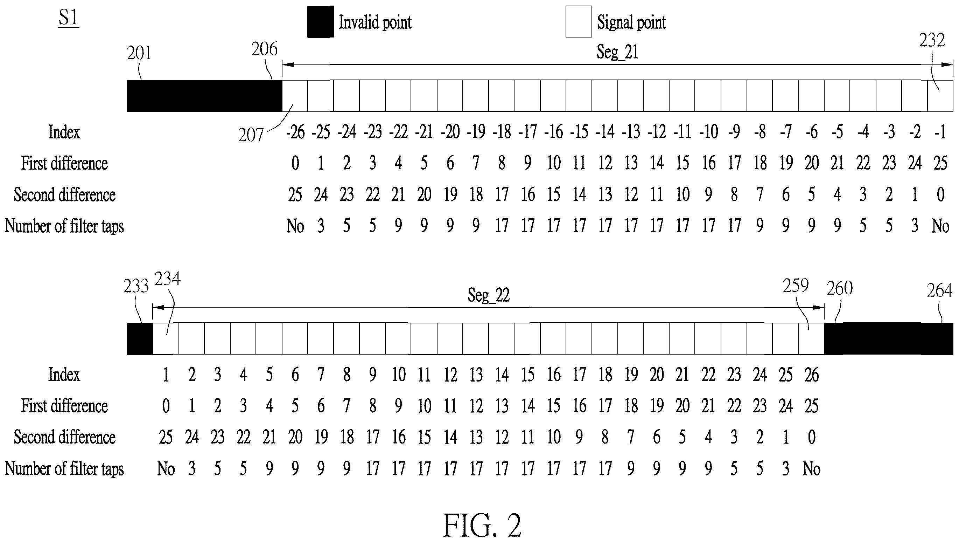

The method in step S110 of distinguishing one or more valid sections from the subcarriers according to at least one null subcarrier may be performed, for example, by dividing the subcarriers in each symbol of the aforementioned OFDM signal into the plurality of valid sections. Reference is made to FIG. 2, which describes the working principle of how valid sections are distinguished in the present disclosure. For the following illustration, 64 subcarriers of a single symbol S1 in the 802.11a system are used for description in the embodiment of FIG. 2, but the present disclosure is not limited thereto.

As shown in FIG. 2, the symbol S1 includes 64 subcarriers 201-232 and 233-264, and 12 subcarriers 201-206, 233 and 260-264 are null subcarriers. The rest of the subcarriers are separated based on at least one null subcarrier, and the subcarriers in the symbol S1 are divided into two valid sections seg_21 and seg_22. The null subcarriers are not used for transmitting pilot signal or data signal, for example, subcarriers 201-206 and 260-264 correspond to frequency guard bands specified by IEEE802.11a standard, and subcarrier 233 corresponds to a DC point, all of which are not used to transmit carrier signals. Therefore, in the embodiment, the valid section seg_21 includes continuous subcarriers 207-232 used to carry signals, and the valid section seg_22 includes continuous subcarriers 234-259 used to carry signals, i.e., the carrier signals. In other words, at least one subcarrier (for example, subcarrier 233) in the 64 subcarriers is used to separate the two adjacent valid sections seg_21 and seg_22.

In addition, in the present disclosure, the index of the subcarrier in each valid section is incremented by 1 in accordance with the sequence of the subcarriers in the valid section, but the initial value of the index in each valid section is not limited in the present disclosure, and may be designed according to actual requirements by a person skilled in the art. For example, the symbol S1 shown in FIG. 2 is based on IEEE802.11a standard. Therefore, in the embodiment, the 26 subcarriers 207-232 in the valid section seg_21 may be indexed from -26 to -1 according to the 802.11a standard, and the 26 subcarriers 234-259 in the valid section seg_22 may be indexed from 1 to 26, but the present disclosure is not limited thereto.

In the embodiment, the predetermined parameters flt(1)-flt(N), with N being 4, are used for description, in which flt(1)<flt(2)<flt(3)<flt(4) and flt(1), flt(2), flt(3), and flt(4) are respectively assumed as 3, 5, 9 and 17, but the present disclosure is not limited thereto.

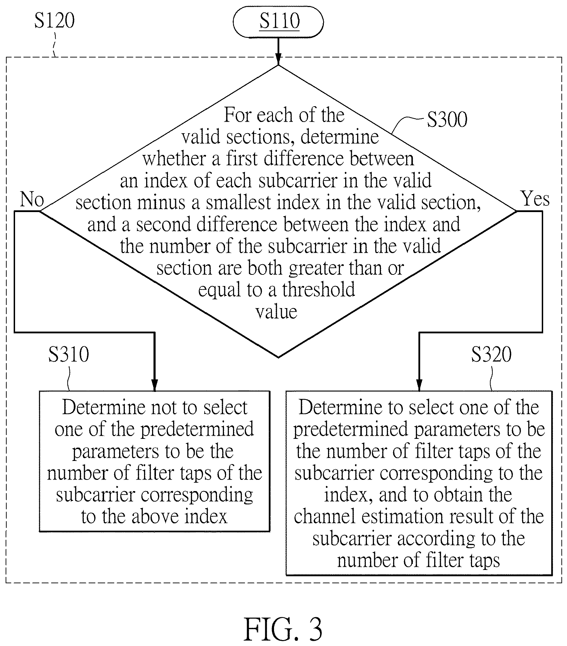

Next, the following descriptions provide details on the determination of whether to select one of the predetermined parameters flt(1)-flt(4) to be the number of filter taps of the i-th subcarrier (hereafter subcarrier #i) in the valid section according to the index of each of the subcarriers 207-232, 234-259 in the valid sections seg_21, seg_22 in the present disclosure. That is, the present disclosure further illustrates an implementation method of step S120. Reference is also made to FIG. 3, which shows a flowchart of determining, according to an index of each subcarrier in each valid section, whether to select one of N predetermined parameters to be the number of filter taps of the subcarrier corresponding to the index in the channel estimation method in FIG. 1.

As shown in FIG. 3, step S120 may also include steps S300, S310 and S320. First, in step S300, it is determined whether a difference (hereafter first difference) between an index of subcarrier #i in a valid section seg_p and the minimum index in the valid section seg_p, and a difference (hereafter second difference) between the maximum index and the index of the subcarrier #i in the valid section seg_p are both greater than or equal to a threshold value θ. In this embodiment, for the valid section seg_21, 1≤i≤26, and it is the same for the valid section seg_22.

It should be noted that, the threshold value θ is a quotient of the minimum predetermined parameter flt(1) (among all the predetermined parameters flt(1)-flt(4)) divided by 2 (in the embodiment, θ=3/2=1). When the first difference and second difference are not both greater than or equal to the threshold value θ, step S310 is then performed. In step S310, it is determined not to select any of the predetermined parameters flt(1)-flt(4) to be the number of filter taps for the subcarrier #i corresponding to the above index in the channel estimation method of the present disclosure. Conversely, when the first difference and the second difference are both greater than or equal to the threshold value θ, step S320 is then performed. In step S320, one of the predetermined parameters flt(1)-flt(4) is selected to be the number of filter taps for the subcarrier #i corresponding to the index, and frequency filtering is performed according to the selected number of filter taps and the time filtering result of the subcarrier #i, to obtain the channel estimation result of the subcarrier #i.

In further detail, the minimum index and the maximum index in the valid section seg_21 are respectively -26 and -1. For the sake of comprehension, calculated results of the first and second differences associated with each of the indices -26 to -1 of the subcarriers 207-232 in the valid section seg_21 are shown in FIG. 2. Similarly, the minimum index and the maximum index in the valid section seg_22 are respectively 1 and 26, thus the calculated results of the first and second differences associated with each of the indices 1-26 of the subcarriers 234-259 in the valid section seg_22 may also be shown in FIG. 2.

As illustrated in FIG. 2, the first and second differences associated with the indices -26 and -1 in the valid section seg_21 are not both greater than or equal to the threshold value θ, thus, in the embodiment, it may be determined not to select any one of the predetermined parameters flt(1)-flt(4) to be the number of filter taps of the first and the 26th subcarrier respectively indexed -26 and -1 (i.e. 207 and 232 in FIG. 2) . Similarly, both the first and second differences, which are associated with the indices 1 and 26 in the valid section seg_22, are not greater than or equal to the threshold value θ either. Thus, in the present disclosure, it may also be determined not to select any one of the predetermined parameters flt(1)-flt(4) to be the number of filter taps of the first and the 26th subcarrier respectively indexed 1 and 26 (i.e. 234 and 259 in FIG. 2).

In summary, according to the aforementioned descriptions, a person skilled in the art may appreciate that, in the embodiment of the present disclosure, one of the objectives of the channel estimation method is to analyze a distance relation between each subcarrier and the boundary of the valid section according to the index of each subcarrier in the valid section, so as to determine whether to select one of the predetermined parameter flt(1)-flt(4) to be the number of filter taps. In other words, the closer a subcarrier is to the boundary of the valid section seg_q (that is, closer to the null subcarrier), the less likely the predetermined parameters flt(1)-flt(N) would be selected as the number of filter taps in the present disclosure.

In addition, the threshold value θ is mainly set according to the minimum predetermined parameter flt(1). For example, in the embodiment, the quotient of the first predetermined parameter flt(1) divided by 2 is the minimum integer 1. Thus, in the embodiment, it is determined not to select any one of the predetermined parameters flt(1)-flt(4) to be the number of filter taps for the four subcarriers (207, 232, 234 and 259 in FIG. 2) respectively distant from the boundary less than 1 subcarrier.

Furthermore, in an embodiment of the present disclosure, for the subcarrier not selecting the number of filter taps from the predetermined parameters, for example, in the subcarriers 207, 232 in the valid section seg_21, the time filtering results of the two subcarriers may be directly used as the channel estimation values respectively for the two subcarriers 207, 232. In other words, after step S310, the frequency filtering circuit of the present disclosure may directly output the time filtering result of the subcarrier #i to be the channel estimation value thereof.

Alternatively, in another embodiment, a parameter (for example, 1 or 2) smaller than the predetermined parameter flt(1) is applied to be the number of filter taps of the two subcarriers 207, 232, then the number of filter taps is used for frequency filtering of the time filtering results of the two subcarriers 207, 232 respectively to obtain the channel estimation results of the two subcarriers 207, 232. In summary, the aforementioned embodiments are used for exemplary purposes only, and the present disclosure is not limited thereto.

On the other hand, reference is also made to FIG. 2, the following provides details on the selection of one of the predetermined parameters flt(1)-flt(4) to be the number of filter taps of the subcarrier according to the index of the subcarrier in the present disclosure. It should be noted that since the selection of the number of filter taps may be implemented in different ways, descriptions in the following are for exemplary purposes only and further details of the invention will be disclosed in various embodiments of the present disclosure.

In the first half of the valid section seg_p, the number of filter taps associated with each of the subcarriers show tendency to increase as each subcarrier in the first half being further away from the boundary than its previous ones. Conversely, the selected number of filter taps of the last half of the subcarriers in the valid section seg_p shows tendency to decrease as each subcarrier in the last half being closer to the boundary than its previous ones. In other words, when the index of the subcarrier is smaller than or equal to the median Me of the index in the valid section seg_p, the greater the index of the subcarrier is, and the greater predetermined parameter flt(n) is selected to be the number of filter taps of the subcarrier corresponding to the index. When the index of the subcarrier is greater than the median Me, the greater the index is, the smaller predetermined parameter flt(n) is selected to be the number of filter taps of the subcarrier corresponding to the index. In this example, n is an integer selected from 1-4.

Specifically, since the median Me of the indices -26 to -1 in the valid section seg_21 are -14 and -13, for the subcarriers indexed from -26 to - 14 in the valid section seg_21, the greater value the index is, and the greater number of filter taps is selected according to the principle disclosed in the embodiments of the present disclosure. Conversely, for the subcarriers indexed from -13 to -1, the greater value the index is, the smaller number of filter taps is selected.

In other words, for the subcarriers arranged further away from the edge of the valid section, a filter with more taps could be selected to increase the anti-interference ability. On the other hand, for the subcarriers closer to the edge, a filter with fewer taps could be selected so as to decrease the edge effect. Therefore, according to the aforementioned descriptions, a person skilled in the art can appreciate that, one objective of the channel estimation method according to the embodiment of the present disclosure is to adopt a plurality of numbers of filter taps for frequency filtering, which finds balance between the anti-interference ability and edge effect so as to achieve a better channel estimation result.

Next, for step S320, the implementation of obtaining the channel estimation result corresponding to the subcarrier according to the selected number of filter taps may be, for example, performing frequency filtering based on the corresponding number of filter taps to the time filtering results of the subcarriers, so as to obtain the channel estimation result of the subcarrier. The operation of frequency filtering is known by a person skilled in the art, thus detailed descriptions will be omitted herein.

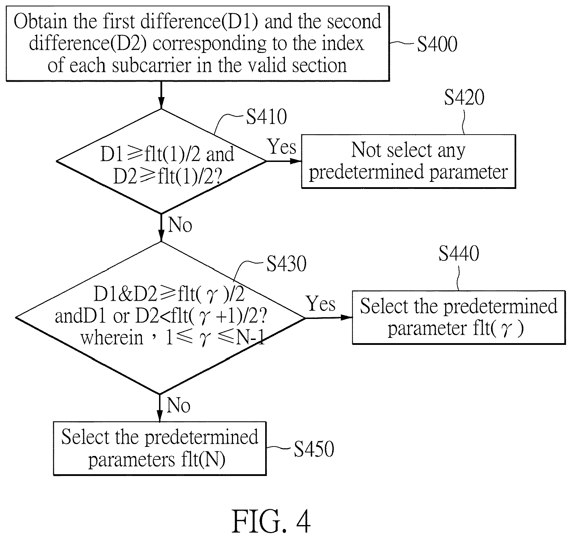

The following description provides further details on the determination of whether to select one of the predetermined parameters flt(1)-flt(N) to be the number of filter taps of the subcarrier according to the index of the subcarrier in FIG. 4. It should be noted that since the selection of the number of filter taps may be implemented in different ways, descriptions in the following are for exemplary purposes only, and should not be taken as limiting the scope of the present disclosure.

Reference is made to FIG. 4. In the embodiment of FIG. 4, the first difference and second difference corresponding to the index of each subcarrier in the valid section seg_p may firstly be calculated (S400). Next, whether the first difference and second difference corresponding to the subcarrier to be filtered currently are both greater than or equal to the quotient of the minimum predetermined parameter flt(1) divided by 2 may then be determined (S410), and if not, both the first and the second differences are greater than or equal to the quotient, and none of the predetermined parameters flt(1)-flt(N) are selected (S420). Conversely, if the first and second differences are both greater than or equal to the quotient, one of the predetermined parameters flt(1)-flt(N) may be selected to be the number of filter taps for the subcarrier. It is then determined that, for 1≤ γ ≤ N-1, whether the first difference and the second difference corresponding to the index of the subcarrier are both greater than or equal to the quotient of the γ^{th} predetermined parameter flt(y) divided by 2, and whether the first difference or the second difference corresponding to the index is smaller than the quotient of the (γ+1)^{th} predetermined parameter flt(γ+1) divided by 2 (S430). If the conditions above in step S430 are all met, the predetermined parameter flt(y) is selected to be the number of filter taps of the subcarrier (S440). Furthermore, if the first difference and the second difference of the index are both greater than or equal to the quotient of the N^{th} predetermined parameters flt(N), the N^{th} predetermined parameters flt(N) is selected to be the number of filter taps of the subcarrier corresponding to the index (S450).

Referring to the valid section seg_21 shown in FIG. 2 for example, after the first difference and the second difference corresponding to the indices -26 to -1 of the subcarriers are calculated, according to the first difference and the second difference corresponding to each index, whether and which of the predetermined parameter should be adapted for the subcarrier would be determined. According to the flowchart shown in FIG. 4, neither the first difference nor the second difference corresponding to the indices -26 and - 1 in the valid section seg_21 is greater than or equal to the quotient of the predetermined parameter flt(1), thus none of the predetermined parameters flt(1)-flt(4) would be selected. The indices -25 and -2 both match the conditions that the first difference and second difference are both greater than or equal to the quotient of the predetermined parameter flt(1), and that the first difference or the second difference is smaller than the quotient of the predetermined parameter flt(2) (i.e., γ=1), so that the subcarriers corresponding to the indices - 25 and -2 select the predetermined parameter flt(1) to be the number of filter taps, that is, 3 taps. Similarly, the indices -24, -23, -4 and -3 all meet the conditions that the first difference and the second difference are greater than or equal to the quotient of the predetermined parameter flt(2), and that the first difference or the second difference is smaller than the quotient of the predetermined parameter flt(3) (i.e., y=2), thus for the subcarriers corresponding to the four indices, the predetermined parameter flt(2) is selected to be the number of filter taps, that is, 5 taps. Similarly, for eight subcarriers corresponding to the indices -22 to -19 and -8 to -5, the predetermined parameter flt(3) may be selected to be the number of filter taps, that is, 9 taps. In addition, the first difference and the second difference corresponding to the indices -18 to -9 are both greater than or equal to the quotient of the predetermined parameter flt(4), thus the predetermined parameter flt(4) may be selected to be the number of filter taps of the subcarrier corresponding to the index, that is, 17 taps.

In FIG. 2, subcarrier quantity in the valid section seg_22 equals that in the valid section seg_21, thus in the present embodiment, the method and result of selecting the number of filter taps corresponding to each subcarrier in the valid section seg_22 are the same as that of in the valid section seg_21, and relevant descriptions will be omitted herein.

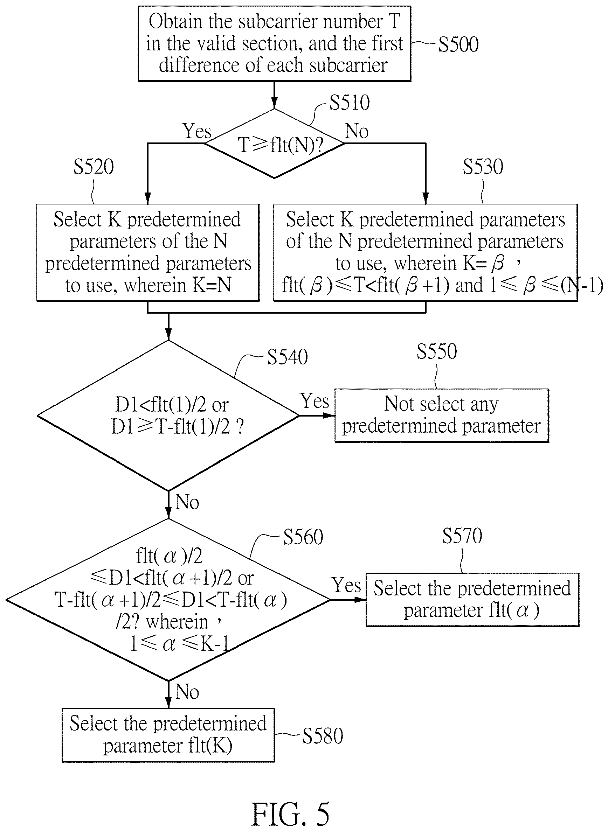

In addition to the illustration shown in FIG. 4, another embodiment of the present disclosure is provided to describe the method of determining whether to select one of the plurality of predetermined parameters flt(1)-flt(N) to be the number of filter taps. Reference is made to FIG. 5, which shows another flowchart of determining, according to the index of the subcarrier in the valid section seg_q, whether to select one of N predetermined parameters to be the number of filter taps for the subcarrier according to the present disclosure.

In the embodiment, the subcarrier number T in the valid section seg_q and the first difference corresponding to the index of each subcarrier are firstly calculated (S500). Next, it is determined if the subcarrier number T is greater than or equal to the maximum predetermined parameter flt(N) (S510) so as to ensure that K predetermined parameters from the N predetermined parameters flt(1)-flt(N) would be selected for use, wherein 1 ≤ K ≤N. If the subcarrier number T is greater than or equal to the maximum predetermined parameter flt(N), K is equal to N (S520). If the subcarrier number T is smaller than the predetermined parameter flt(N), and the subcarrier number T is greater than or equal to the predetermined parameter flt(*β*) and smaller than the predetermined parameter flt(*β*+1), K is equal to *β*, wherein 1 ≤ *β* ≤ N-1 (S530).

After K is determined either through step S520 or through step S530, it may proceed to compare whether the first difference corresponding to the index of the current subcarrier is smaller than the quotient of the minimum predetermined parameter flt(1), or whether the first difference is greater than or equal to the result of the subcarrier number T minus the quotient of the minimum predetermined parameter flt(1) (S540). If yes, none of the predetermined parameters flt(1)-flt(K) is selected (S550). If the first difference does not meet the condition in step S540, under the condition that 1 ≤ α ≤ K-1, it is determined whether the first difference is greater than or equal to the quotient of the predetermined parameter flt(a) divided by 2 and smaller than the quotient of the parameter flt(α+1) divided by 2, or whether the first difference is greater than or equal to the result of the subcarrier number T minus the quotient of the predetermined parameter flt(α+1) divided by 2 and smaller than the result of the subcarrier number T minus the quotient of the parameter flt(a) divided by 2 (S560). If the first difference meets the condition in step S560, the predetermined parameter flt(a) is selected to be the number of filter taps for the corresponding subcarrier (S570). If the first difference does not meet the condition in step S540 or step S560, the predetermined parameter flt(K) may be selected to be the number of filter taps for the corresponding subcarrier (S580).

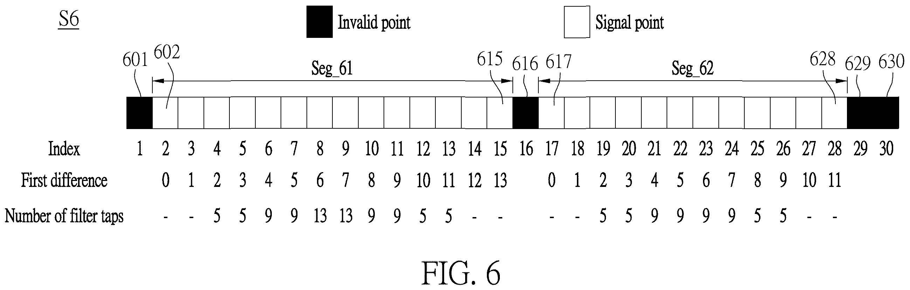

For further descriptions of the flowchart shown in FIG. 5, a symbol S6 in another OFDM system is illustrated in FIG. 6 for description. As shown in FIG. 6, it is assumed that the symbol S6 includes 30 subcarriers 601-630. The indices of the subcarriers may, for example, be specified according to the corresponding communication standard, or simply according to the subcarrier order. In the embodiment, the indices of the 30 subcarriers are incremented sequentially from 1 to 30. As shown in FIG. 6, the symbol S6, according to the null subcarriers 601, 616, 629 and 630, is divided into 2 valid sections seg_61 and seg_62, and the subcarriers in the valid section all carry carrier signals. The valid section seg_61 includes 14 subcarriers with the indices 2-15, and the valid section seg_62 includes 12 subcarriers with the indices 17-28, but the present disclosure is not limited thereto. For ease of illustration, the first differences corresponding to the indices of the subcarriers of the valid sections seg_61 and the seg_62 are shown in FIG. 6. In addition, in the following descriptions, the N in the predetermined parameters flt(1)-flt(N) in the embodiment of FIG. 6 are changed to be 3, and the predetermined parameters flt(1)-flt(3) are respectively, for example, 5, 9 and 13, but the present disclosure is not limited thereto.

Taking the valid section seg_61 for example, firstly figure out the subcarrier number T in the valid section seg_61, which is 14, and calculate the first difference corresponding to the index of each subcarrier (as shown in FIG. 6). Next, a comparison is made to determine if the subcarrier number T is greater than or equal to the maximum predetermined parameter flt(3) in the embodiment. Since the amount of subcarriers in the valid section seg_61 is 14, which is greater than the predetermined parameter flt(3), which is 13, it can be determined that all the three predetermined parameters would be used in the selection, and the first difference corresponding to the index of each subcarrier in the valid section seg_61 is compared to the quotient of each of the three predetermined parameters flt(1)-flt(3) divided by 2, that is, K=N=3 (as corresponding to step S520 in FIG. 5).

Therefore, the determination or selection of steps S540 to S580 may be performed according to the first difference corresponding to the index of each subcarrier in the valid section seg_61.

It should be noted that, the first predetermined parameter flt(1) is 5 in the embodiment regarding FIG. 6, thus the threshold value θ in this embodiment should be 2 (i.e., 5/2=2). In this way, according to the aforementioned descriptions, the first and second differences associated with the indices 2, 3, 14 and 15 in the valid section seg_61 are not both greater than or equal to the threshold value θ, thus in the present disclosure, it may be determined to not select the predetermined parameters flt(1)-flt(3) to be the number of filter taps for the four subcarriers indexed 2, 3, 14 and 15 (corresponding to steps S540, S550 in FIG. 5). Details of the above procedural steps are similar to those in the previous embodiments, and will thus be omitted in the following description.

Next, corresponding to steps S560 and S570 in FIG. 5 and collaboratively referring to FIG.6, it can be appreciated that when α=1, the first differences corresponding to indices 4 and 5 of the valid section seg_61 are both greater than or equal to the quotient of the first predetermined parameter flt(1), and both smaller than the quotient of the second predetermined parameter flt(2). The first differences corresponding to the indices 12 and 13 are both greater than or equal to the result of the subcarrier number T minus the quotient of the predetermined parameter flt(2) (i.e., 10), and both smaller than the result of the subcarrier number T minus the quotient of the predetermined parameter flt(1) (i.e., 12). Therefore, the predetermined parameter flt(1) is selected to be the number of filter taps for the four subcarriers indexed 4, 5, 12, and 13, that is, 5 taps. Similarly, when α=2, the first differences corresponding to indices 6 and 7 of the valid section seg_61 are both greater than or equal to the quotient of the predetermined parameter flt(2), and both smaller than the quotient of the predetermined parameter flt(3). The first differences corresponding to the indices 10 and 11 are both greater than or equal to the result of the subcarrier number T minus the quotient of the predetermined parameter flt(3) (i.e., 8), and both smaller than the result of the subcarrier number T minus the quotient of the predetermined parameter flt(2) (i.e., 10). Hence, the predetermined parameter flt(2) is selected to be the number of filter taps of the four subcarriers indexed 6, 7, 10, and 11, that is, 9 taps. In this embodiment, K=3, therefore 1 ≤ α ≤ 2.

In addition, since the first differences corresponding to the indices 8 and 9 in the valid section seg_61 do not meet the aforementioned condition according to step S580 in FIG. 5, the predetermined parameter flt(K) may be selected to be the number of filter taps for the 2 subcarriers. The predetermined parameter flt(K) is predetermined parameter flt(3) is in this embodiment, which is 13 taps.

The following takes the valid section seg_62 for another example, which focuses only on the differences between the valid section seg_61 and the valid section seg_62. The subcarrier number T of the valid section seg_62 is 12, which is smaller than the maximum predetermined parameter flt(3) but greater than or equal to the predetermined parameter flt(2) (i.e., *β*= 2). Therefore, only the first two of the predetermined parameters flt(1)-flt(3) (i.e., K=*β*=2) are used in comparing with the first differences of the subcarriers. Specifically speaking, the first difference associated with the index of each subcarrier in the valid section seg_62 can be used to compare with the quotient of each predetermined parameter in the predetermined parameters flt(1)-flt(2) being divided by 2 (as corresponding to step S530 in FIG. 5).

Therefore, in the procedures corresponding to steps S560, S570 in FIG. 5, it can be appreciated by referring to FIG. 6 that when α=1, the first differences associated with indices 19 and 20 in the valid section seg_62 are both greater than or equal to the quotient of the predetermined parameter flt(1), and both smaller than the quotient of the predetermined parameter flt(2). The first differences associated with indices 25 and 26 are both greater than or equal to the result of the subcarrier number T minus the quotient of the predetermined parameter flt(2) (i.e., 8), and both smaller than the result of the subcarrier number T minus the quotient of the predetermined parameter flt(1) (i.e., 10). Therefore the predetermined parameter flt(1) would be selected to be the number of filter taps of the four subcarriers indexed 19, 20, 25 and 26 in the present disclosure, that is, 5 taps. In this embodiment, K=2, therefore *α*=1.

In addition, since the first differences associated with the indices 21-24 in the valid section seg_62 do not meet the conditions in step S540 or step S560, the predetermined parameter flt(K) is selected to be the number of filter taps of the subcarriers indexed 21-24 according to step S580. The predetermined parameter flt(K) in this example is the predetermined parameter flt(2), that is, 9 taps.

It should be noted that, in FIG. 4, the amount of subcarriers and the distribution of the null subcarriers or carrier signals of the symbol S4 are designed for exemplary purposes only. Being applied in various communication standards adopting OFDM technology, arrangements of the subcarriers may vary in accordance with the specification of corresponding communication standards. In summary, the aforementioned illustrations are for exemplary purposes only, and the present disclosure is not limited thereto.

The aforementioned embodiments give clear pictures that when performing channel estimation via OFDM signals, according to the index corresponding to each subcarrier, a proper number of filter taps could be selected from a plurality of different numbers of filter taps for frequency filtering. Therefore, subcarriers closer to the null subcarrier (i.e., edge) would be filtered with fewer filter taps, meanwhile subcarriers farther away from the null subcarrier would be filtered with more filter taps, so as to strike a balance between overall performance of the channel estimation and edge effect.

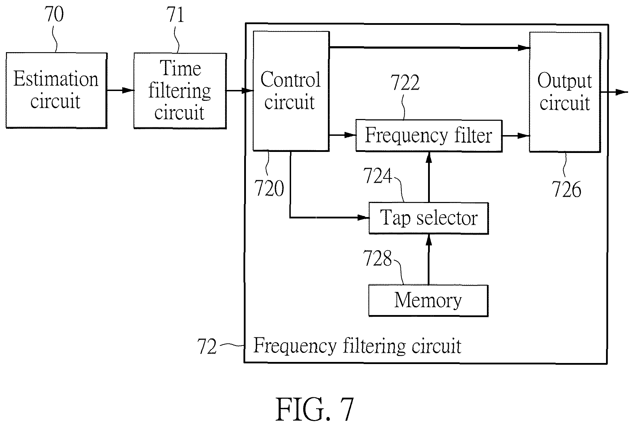

Finally, for further describing the operational procedures of the channel estimation method, an implementation for the method of the present disclosure is provided. Reference is made to FIG. 7, which shows a block diagram of a channel estimation circuit according to an embodiment of the present disclosure. However, the channel estimation circuit 7 in the following is only one implementation of the aforementioned method, and the present disclosure is not limited thereto. In addition, the channel estimation circuit 7 may be implemented in a receiver of any OFDM system that receives OFDM symbols via a plurality of subcarriers, but the implementation of the receiver is not limited in the present disclosure; a person skilled in the art may design the receiver according to actual requirements or applications.

More specifically, the channel estimation circuit 7 may include an estimation circuit 70, a time filtering circuit 71 coupled to the estimation circuit 70, and a frequency filtering circuit 72 coupled to the time filtering circuit 71. The aforementioned estimation circuit 70, the time filtering circuit 71 and the frequency filtering circuit 72 may be implemented purely by hardware components, or combined hardware with software or firmware elements. In summary, the implementation of the channel estimation circuit 7 is not limited in the present disclosure. In addition, the estimation circuit 70, the time filtering circuit 71 and the frequency filtering circuit 72 may be integrated or arranged separately, and the present disclosure is not limited thereto.

The estimation circuit 70 is used for generating an initial channel estimation result of each carrier signal in the subcarriers. For example, in IEEE 802.11a standard, the initial channel estimation results may be those generated based on the carrier signals of the long training symbols. The time filtering circuit 71 would perform time filtering on the initial channel estimation results to obtain the time filtering results corresponding to the subcarriers, so that the frequency filtering circuit 72 may perform frequency filtering on the time filtering results to obtain the channel estimation result of the subcarrier.

In the embodiment, the frequency filtering circuit 72 may further include a control circuit 720, a frequency filter 722, a tap selector 724, an output circuit 726, and a memory 728.

Since every OFDM system has a corresponding subcarrier structure, the control circuit 720 may divide the subcarriers into one or more valid sections against at least one null subcarrier according to the corresponded OFDM system and subcarrier structure. If the subcarriers are divided into a plurality of valid sections, adjacent valid sections are separated from at least one null subcarrier in the subcarriers, and the null subcarrier are excluded from valid sections. For each of the valid sections, the control circuit 720 determines whether to select one of N predetermined parameters to be the number of filter taps of the subcarrier corresponding to the index according to an index of each subcarrier in the valid section, and the channel estimation result of the subcarrier is obtained according to the number of filter taps, where N is an integer greater than 1.

When the control circuit 720, according to the subcarrier number T in the valid section and the first difference and/or the second difference corresponding to each subcarrier index, determines that none of the N predetermined parameters are needed to be selected for the subcarrier for filtering, the time filtering result of the subcarrier may be directly transmitted to the output circuit 726 to be output as the channel estimation result of the subcarrier. Conversely, when the control circuit 720 determines that one of the N predetermined parameters is needed to be selected for the subcarrier for filtering, the control circuit 720 would control the time filtering result of the subcarrier to be transmitted to the frequency filter 722, select the number of filter taps corresponding to the index of the subcarrier in accordance with the abovementioned description, and control the tap selector 724 to select one predetermined parameter from the plurality of predetermined parameters flt(1)-flt(N) stored in the memory 728, so as to allow the frequency filter 722 to perform frequency filtering on the time filtering result according to the selected predetermined parameter. The filtered result of the frequency filter 722 is outputted by the output circuit 726 to be the channel estimation result of the subcarrier.

It should be noted that, in the present disclosure, the index of the subcarrier in each valid section is incremented by 1. Details on the steps performed by the control circuit 720 to determine whether to select one from the N predetermined parameters to be the number of filter taps of the subcarrier corresponding to the index according to the index of each subcarrier in the valid section are the same as that described in the embodiments corresponding to FIG. 1 to FIG. 6, and will not be reiterated herein. Similarly, the concept and details of the control circuit 720 selecting one of the N predetermined parameters to be the number of filter taps of the subcarrier corresponding to the index according to the index of the subcarrier is also the same as that described in the aforementioned embodiments, and will not be reiterated herein.

It is worth mentioned that, if the OFDM system complies with 802.11 standards, all of the carrier signals in the valid section would be known data, but if the OFDM system is a DVB-T system, a DVB-T2 system, or the likes of communication systems, some of the carrier signals in the valid section may be unknown data to the receiver. Therefore, the channel estimation may be performed after the data of all carrier signals are recovered, or interpolating to get the unknown signals during the frequency filtering; the present disclosure is not limited thereto.

In summary, according to the channel estimation method and the channel estimation circuit provided in the embodiment of the present disclosure, the index of each subcarrier in a valid section can be relied upon to analyze the distance between each subcarrier and the boundary of the valid section, so as to determine whether to select one of a plurality of predetermined parameters to be the number of filter taps for the subcarrier. In addition, in the channel estimation method and the channel estimation circuit provided by the embodiment of the present disclosure, the carrier signals used are all actual signals, so that virtual pilots and complex prediction model algorithms therefor used to filter a subcarrier closer to the boundary are not needed, and channel estimation results with decreased accuracy can be avoided. Furthermore, since several sets of numbers of filter taps with coefficients from low to high are used in the channel estimation method and the channel estimation circuit, for the subcarrier distant from the boundary, greater filter taps can be selected to increase the ability of a subcarrier against interferences; for a subcarrier closer to the boundary, smaller filter taps can be selected by the invention of the present disclosure, thereby decrease the edge effect. Therefore, an improved balance can be achieved between anti-interference capabilities and edge effect, and the overall performance of the channel estimation of the OFDM signal can be increased.

The aforementioned descriptions merely represent the preferred embodiments of the present disclosure, without any intention to limit the scope of the present disclosure which is fully described only within the following claims.

## Claims

1. A channel estimation method in a receiver of an OFDM system for receiving carrier signals via a plurality of subcarriers, wherein the channel estimation method comprises the steps of:
obtaining an initial channel estimation result of each carrier signal of the subcarriers, and filtering the initial channel estimation results in time domain to obtain a plurality of time filtering results of the carrier signals corresponding to the subcarriers (S 100);
dividing the subcarriers into at least one valid section according to at least one null subcarrier comprised in the subcarriers(S110), wherein the subcarriers comprises first subcarriers and second subcarriers, the valid section is corresponded to the first subcarriers for transmitting the carrier signals, while the null subcarrier is corresponded to the second subcarriers and not used for transmitting carrier signals; and
**characterized by** determining according to an index of each of the subcarriers in the valid section whether to select one of N predetermined parameters to be the number of filter taps for the subcarrier corresponding to the index, and filtering the time filtering results in frequency domain according to the filter taps to obtain a channel estimation value of the subcarrier (S120), wherein the index of the subcarrier reflects a distance between the subcarrier and a boundary of the valid section, a smaller predetermined parameter is selected from the N predetermined parameters to be the number of filter taps for the subcarrier when the subcarrier is closer to the boundary of the valid section, and it is determined not to select one of the N predetermined parameters to be the number of filter taps for the subcarrier when the subcarrier is closest to the boundary of the valid section;
wherein said N is an integer greater than 1, and the indices of the subcarriers are incremented by 1 in accordance with the sequence of the subcarriers in the valid section.

2. The channel estimation method of claim 1, **characterized in that** the step of determining whether to select one of N predetermined parameters to be the number of filter taps for the subcarrier corresponding to the index according to the index of each of the subcarriers in the valid section further includes steps of:
for each subcarrier in the valid section, determining whether a first difference between the index of each of the subcarriers in the valid section and the minimum index in the valid section and a second difference between the maximum index in the valid section and the index of the subcarrier are both greater than or equal to a threshold value, wherein the threshold value is a quotient of the minimum predetermined parameter of the N predetermined parameters divided by 2 (S300);
determining not to select one of the N predetermined parameters to be the number of filter taps of the subcarrier corresponding to the index when both the first difference and the second difference are not greater than or equal to the threshold value(S310); and
determining to select one of the N predetermined parameters to be the number of filter taps of the subcarrier corresponding to the index when the first difference and the second difference are both greater than or equal to the threshold value, and obtaining the channel estimation value of the subcarrier according to the number of filter taps (S320).

3. The channel estimation method of claim 2, **characterized in that**, in the step of selecting one of the N predetermined parameters to be the filter taps of the subcarrier corresponding to the index,
when the index is not greater than a median of the indices in the valid section, the greater the index is, the greater the predetermined parameter is selected to be the filter taps; and
when the index is greater than the median, the greater the index is, the smaller the predetermined parameter is selected to be the filter taps.

4. The channel estimation method of claim 2, **characterized in that** the step of selecting one of the N predetermined parameters to be the number of filter taps of the subcarrier corresponding to the index further includes steps of:
selecting K predetermined parameters from the N predetermined parameters in ascending order according to a quantity of the subcarriers in the valid section, and comparing the first difference of the subcarrier with the quotient of each of the K predetermined parameter divided by 2 , wherein said 1≤K≤N; and
selecting the *α*^{th} predetermined parameter to be the number of filter taps of the subcarrier corresponding to the index when the first difference of the subcarrier is greater than or equal to the quotient of the *α*^{th} predetermined parameter of the K predetermined parameters, and is smaller than the quotient of the (*α*+1)^{th} predetermined parameter of the K predetermined parameters, or, selecting the *α*^{th} predetermined parameter to be the number of filter taps of the subcarrier corresponding to the index when the first difference of the index is greater than or equal to the quantity subtracting the quotient of the (*α*+1)^{th} predetermined parameter, and smaller than the quantity subtracting the quotient of the *α*^{th} predetermined parameter, wherein said 1≤*α*≤K-1;
wherein said K=*β* when the quantity is greater than or equal to the *β*^{th} predetermined parameter in the N predetermined parameters, and smaller than the (*β*+1)^{th} predetermined parameter of the N predetermined parameters, wherein said 1≤*β*≤N-1, and said K=N when the quantity is greater than or equal to the N^{th} predetermined parameter.

5. The channel estimation method of claim 4, **characterized in that**, when the first difference of the index is greater than or equal to the quotient of the K^{th} predetermined parameter, and smaller than or equal to the quantity subtracting the quotient of the K^{th} predetermined parameter in the valid section, the K^{th} predetermined parameter is selected to be the number of filter taps of the subcarrier corresponding to the index.

6. The channel estimation method of claim 2, **characterized in that** the step of selecting one of the N predetermined parameters to be the number of filter taps of the subcarrier corresponding to the index further includes a step of:
when the first difference and the second difference of the subcarrier are both greater than or equal to the quotient of the γ^{th} predetermined parameter divided by 2, and one of the first difference and the second difference is smaller than the quotient of the (γ+1)^{th} predetermined parameter divided by 2, selecting the γ^{th} predetermined parameter to be the number of filter taps of the subcarrier corresponding to the index, wherein said 1≤γ≤N-1, and the N predetermined parameters is arranged in ascending order.

7. The channel estimation method of claim 6, **characterized in that**, when the first difference and the second difference of the subcarrier are both greater than or equal to the quotient of the N^{th} predetermined parameter, selecting the N^{th} predetermined parameter to be the number of filter taps of the subcarrier corresponding to the index.

8. The channel estimation method of claim 2, **characterized in that**, after the step of determining not to select one of the N predetermined parameters to be the number of filter taps of the subcarrier corresponding to the index, the time filtering result of the subcarrier is directly outputted to be the channel estimation value of the subcarrier.

9. A channel estimation circuit (7) in a receiver of an OFDM system for receiving carrier signals via a plurality of subcarriers, wherein the channel estimation circuit comprises:
an estimation circuit (70), used for obtaining an initial channel estimation result of each carrier signals of the subcarriers;
a time filtering circuit (71), coupled to the estimation circuit, and performing time filtering to the initial channel estimation results to obtain a plurality of time filtering results of the carrier signals corresponding to the subcarriers; and
a frequency filtering circuit (72), coupled to the time filtering circuit, and dividing the subcarriers into at least one valid section according to at least one null subcarrier comprised in the subcarriers, wherein the subcarriers comprises first subcarriers and second subcarriers, the valid section is corresponded to the first subcarriers for transmitting the carrier signals, while the null subcarrier is corresponded to the second subcarriers and not used for transmitting carrier signals;
**characterized in that** the frequency filtering circuit (72) determines according to an index of each of the subcarriers in the valid section whether to select one of N predetermined parameters to be the number of filter taps for the subcarrier corresponding to the index, and filters the time filtering results in frequency domain according to the filter taps to obtain a channel estimation value of the subcarrier, wherein the index of the subcarrier reflects a distance between the subcarrier and a boundary of the valid section, a smaller predetermined parameter is selected from the N predetermined parameters to be the number of filter taps for the subcarrier when the subcarrier is closer to the boundary of the valid section, and it is determined not to select one of the N predetermined parameters to be the number of filter taps for the subcarrier when the subcarrier is closest to the boundary of the valid section;
wherein said N is an integer greater than 1, and the indices of the subcarriers are incremented by 1 in accordance with the sequence of the subcarriers in the valid section.

10. The channel estimation circuit (7) of claim 9, **characterized in that**, for each subcarrier of the valid section, the frequency filtering circuit (72) performs the following steps to determine, according to the index of each of the subcarriers in the valid section, whether to select one of N predetermined parameters to be the number of filter taps of the subcarrier corresponding to the index:
determining, for each subcarrier of the valid section, whether a first difference between the index of the subcarrier in the valid section and the minimum index in the valid section, and a second difference between the maximum index in the valid section and the index of the subcarrier, are both greater than or equal to a threshold value, wherein the threshold value is a quotient of the minimum predetermined parameter of the N predetermined parameters divided by 2;
determining not to select one of the N predetermined parameters to be the number of filter taps of the subcarrier corresponding to the index when not both the first difference and the second difference are greater than or equal to the threshold value; and
determining to select one of the N predetermined parameters to be the number of filter taps of the subcarrier corresponding to the index when the first difference and the second difference are both greater than or equal to the threshold value, and obtaining the channel estimation value of the subcarrier according to the number of filter taps.

11. The channel estimation circuit (7) of claim 10, **characterized in that** the frequency filtering circuit (72) performs the following steps to select one of the N predetermined parameters to be the number of filter taps of the subcarrier corresponding to the index:
when the index is not greater than a median of the indices in the valid section, the greater the index is, the greater the predetermined parameter is selected by a second calculating circuit to be the filter taps; and
when the index is greater than the median, the greater the index is, the smaller the predetermined parameter is selected by the second calculating circuit to be the filter taps.

12. The channel estimation circuit (7) of claim 10, **characterized in that** the frequency filtering circuit (72) performs the following steps to select one of the N predetermined parameters to be the number of filter taps of the subcarrier corresponding to the index:
selecting K predetermined parameters, from the N predetermined parameters in ascending order according to a quantity of the subcarriers in the valid section, and comparing the first difference of the subcarrier with the quotient of each of the K predetermined parameters divided by 2, wherein said 1≤K≤N; and
selecting the *α*th predetermined parameter to be the number of filter taps of the subcarrier corresponding to the index when the first difference of the subcarrier is greater than or equal to the quotient of the *α*^{th} predetermined parameter of the K predetermined parameters, and is smaller than the quotient of the (*α*+1)^{th} predetermined parameter of the K predetermined parameters, or, selecting the *α*^{th} predetermined parameter to be the number of filter taps of the subcarrier corresponding to the index when the first difference of the index is greater than or equal to the quantity subtracting the quotient of the (*α*+1)^{th} predetermined parameter, and smaller than the quantity subtracting the quotient of the *α*^{th} predetermined parameter, wherein said 1≤*α*≤K-1;
wherein said K=*β* when the quantity is greater than or equal to the *β*^{th} predetermined parameter in the N predetermined parameters, and smaller than the (*β*+1)^{th} predetermined parameter of the N predetermined parameters, wherein said 1≤*β*≤N-1, and said K=N when the quantity is greater than or equal to the N^{th} predetermined parameter.

13. The channel estimation circuit (7) of claim 12, **characterized in that**, when the first difference of the index is greater than or equal to the quotient of the K^{th} predetermined parameter, and smaller than or equal to the quantity subtracting the quotient of the K^{th} predetermined parameter in the valid section, the K^{th} predetermined parameter is selected to be the number of filter taps of the subcarrier corresponding to the index.

14. The channel estimation circuit (7) of claim 10, **characterized in that**, the frequency filtering circuit (72) performs the following steps to select one of the N predetermined parameters to be the number of filter taps of the subcarrier corresponding to the index:
when the first difference and the second difference of the subcarrier are both greater than or equal to the quotient of the *γ*^{th} predetermined parameter divided by 2, and one of the first difference and the second difference is smaller than the quotient of the (γ+1)^{th} predetermined parameter divided by 2, selecting the *γ*^{th} predetermined parameter to be the number of filter taps of the subcarrier corresponding to the index, wherein said 1≤*γ*≤N-1, and the N predetermined parameters is arranged in ascending order.

15. The channel estimation circuit (7) of claim 14, **characterized in that**, when the first difference and the second difference of the subcarrier are both greater than or equal to the quotient of the N^{th} predetermined parameter, the N^{th} predetermined parameter is selected to be the number of filter taps of the subcarrier corresponding to the index.

16. The channel estimation circuit (7) of claim 10, **characterized in that**, after the step of determining not to select one of the N predetermined parameters to be the number of filter taps of the subcarrier corresponding to the index, the time filtering result of the subcarrier is directly outputted to be the channel estimation value of the subcarrier.

## Patentansprüche

1. Kanal-Schätzung-Verfahren in einem Empfänger eines OFDM-Systems zum Empfangen von Trägersignalen über eine Vielzahl von Unterträgern, wobei das Kanal-Schätzung-Verfahren die folgenden Schritte aufweist:
Erlangen eines anfänglichen Kanal-Schätzung-Ergebnisses für jedes Trägersignal der Unterträger, und Filtern der anfänglichen Kanal-Schätzung-Ergebnisse im Zeitbereich, um eine Vielzahl von Zeitfilterung-Ergebnissen der Trägersignale zu erlangen, welche mit den Unterträgern (S100) korrespondieren,
Einteilen der Unterträger in mindestens einen gültigen Bereich gemäß mindestens einem Null-Unterträger, welchen die Unterträger aufweisen (S110), wobei die Unterträger erste Unterträger und zweite Unterträger aufweisen, wobei der gültige Bereich mit den ersten Unterträgern zum Übertragen der Trägersignale korrespondiert, während der Null-Unterträger mit den zweiten Unterträgern korrespondiert und nicht zum Übertragen von Trägersignalen verwendet wird, und
**gekennzeichnet durch**
Bestimmen gemäß einem Index von jedem der Unterträger in dem gültigen Bereich, ob einer von N vorbestimmten Parametern ausgewählt wird, um die mit dem Index korrespondierende Anzahl von Filterabgriffen für den Unterträger zu sein, und Filtern der Zeitfilterung-Ergebnisse im Frequenzbereich gemäß den Filterabgriffen, um einen Kanal-Schätzung-Wert des Unterträgers zu erlangen (S120), wobei der Index des Unterträgers einen Abstand zwischen dem Unterträger und einer Grenze des gültigen Bereichs widerspiegelt, wobei ein kleinerer vorbestimmter Parameter von den N vorbestimmten Parametern ausgewählt wird, um die Anzahl von Filterabgriffen für den Unterträger zu sein, wenn sich der Unterträger näher an der Grenze des gültigen Bereichs befindet, und wobei bestimmt wird, keinen von den N vorbestimmten Parametern auszuwählen, um die Anzahl von Filterabgriffen für den Unterträger zu sein, wenn der Unterträger sich am nächsten an der Grenze des gültigen Bereichs befindet,
wobei besagtes N eine Ganzzahl größer als 1 ist und die Indizes der Unterträger um 1 inkrementiert werden in Übereinstimmung mit der Reihenfolge der Unterträger in dem gültigen Bereich.

2. Kanal-Schätzung-Verfahren gemäß Anspruch 1, **dadurch gekennzeichnet, dass** der Schritt des Bestimmens, ob einer von N vorbestimmten Parametern ausgewählt wird, um die mit dem Index korrespondierende Anzahl von Filterabgriffen für den Unterträger zu sein gemäß dem Index von jedem der Unterträger in dem gültigen Bereich, ferner folgende Schritte aufweist:
für jeden Unterträger in dem gültigen Bereich, Bestimmen, ob sowohl eine erste Differenz zwischen dem Index von jedem der Unterträger in dem gültigen Bereich und dem minimalen Index in dem gültigen Bereich als auch eine zweite Differenz zwischen dem maximalen Index in dem gültigen Bereich und dem Index des Unterträgers größer als oder gleich einem Grenzwert ist, wobei der Grenzwert ein Quotient des minimalen vorbestimmten Parameters von den N vorbestimmten Parametern dividiert durch 2 ist (S300),
Bestimmen, einen von den N vorbestimmten Parameter nicht auszuwählen, um die mit dem Index korrespondierende Anzahl von Filterabgriffen des Unterträgers zu sein, wenn sowohl die erste Differenz als auch die zweite Differenz nicht größer als oder gleich dem Grenzwert sind (S310), und
Bestimmen, einen von den N vorgegebenen Parameter auszuwählen, um die mit dem Index korrespondierende Anzahl von Filterabgriffen des Unterträgers zu sein, wenn sowohl die erste Differenz als auch die zweite Differenz größer als oder gleich dem Grenzwert ist, und
Erlangen des Kanal-Schätzung-Wertes des Unterträgers gemäß der Anzahl von Filterabgriffen (S320).

3. Kanal-Schätzung-Verfahren gemäß Anspruch 2, **dadurch gekennzeichnet, dass** in dem Schritt des Auswählens eines von den N vorbestimmten Parametern, um die mit dem Index korrespondierenden Filterabgriffe des Unterträgers zu sein,
wenn der Index nicht größer als ein Median der Indizes in dem gültigen Bereich ist, je größer der Index ist, der vorbestimmte Parameter desto größer ist, welcher ausgewählt wird, um die Filterabgriffe zu sein, und
wenn der Index größer als der Median ist, je größer der Index ist, der vorbestimmte Parameter desto kleiner ist, welcher ausgewählt wird, um die Filterabgriffe zu sein.

4. Kanal-Schätzung-Verfahren gemäß Anspruch 2, **dadurch gekennzeichnet, dass** der Schritt des Auswählens eines von den N vorbestimmten Parametern, um die mit dem Index korrespondierende Anzahl von Filterabgriffen des Unterträgers zu sein, ferner die folgenden Schritte aufweist:
Auswählen von K vorbestimmten Parametern aus den N vorbestimmten Parametern in aufsteigender Reihenfolge gemäß einer Stückzahl von Unterträgern in dem gültigen Bereich, und Vergleichen der ersten Differenz des Unterträgers mit dem Quotienten von jedem der K vorbestimmten Parameter dividiert durch 2, wobei 1≤K≤N ist, und
Auswählen des *α*-ten vorbestimmten Parameters, um die mit dem Index korrespondierende Anzahl von Filterabgriffen des Unterträgers zu sein, wenn die erste Differenz des Unterträgers größer als oder gleich dem Quotienten des *α*-ten vorbestimmten Parameters von den K vorbestimmten Parametern ist und kleiner als der Quotient des (*α*+1)-ten vorbestimmten Parameters von den K vorbestimmten Parametern ist, oder
Auswählen des *α*-tenvorbestimmten Parameters, um die mit dem Index korrespondierende Anzahl von Filterabgriffen des Unterträgers zu sein, wenn die erste Differenz des Index größer als oder gleich der Stückzahl abzüglich des Quotienten des (*α*+1)-ten vorbestimmten Parameters ist und kleiner als die Stückzahl abzüglich des Quotienten des *α*-tenvorbestimmten Parameters ist, wobei 1≤*α*≤K-1 ist,
wobei besagtes K=β ist, wenn die Stückzahl größer als oder gleich dem β-ten vorbestimmten Parameter von den N vorbestimmten Parametern ist, und kleiner als der (β+1)-te vorbestimmte Parameter von den N vorbestimmten Parametern ist, wobei 1≤β≤N-1 ist, und wobei besagtes K=N ist, wenn die Stückzahl größer als oder gleich dem N-ten vorbestimmten Parameter ist.

5. Kanal-Schätzung-Verfahren gemäß Anspruch 4, **dadurch gekennzeichnet, dass**, wenn die erste Differenz des Index größer als oder gleich dem Quotienten des K-ten vorbestimmten Parameters und kleiner als oder gleich der Stückzahl abzüglich des Quotienten des K-ten vorbestimmten Parameters in dem gültigen Bereich ist, der K-te vorbestimmte Parameter ausgewählt wird, um die mit dem Index korrespondierende Anzahl von Filterabgriffen des Unterträgers zu sein.

6. Kanal-Schätzung-Verfahren gemäß Anspruch 2, **dadurch gekennzeichnet, dass** der Schritt des Auswählens eines von den N vorbestimmten Parametern, um die mit dem Index korrespondierende Anzahl von Filterabgriffen des Unterträgers zu sein, ferner einen folgenden Schritt aufweist:
wenn sowohl die erste Differenz als auch die zweite Differenz des Unterträgers größer als oder gleich dem Quotienten des γ-ten vorbestimmten Parameters geteilt durch 2 ist und eine von der ersten Differenz und der zweiten Differenz kleiner als der Quotient des (γ+1)-ten vorbestimmten Parameters geteilt durch 2 ist, Auswählen des γ-ten vorbestimmten Parameters, um die mit dem Index korrespondierende Anzahl von Filterabgriffen des Unterträgers zu sein, wobei 1≤γ≤N-1 ist, und wobei die N vorbestimmten Parameter in aufsteigender Reihenfolge angeordnet sind.

7. Kanal-Schätzung-Verfahren gemäß Anspruch 6, **dadurch gekennzeichnet, dass**, wenn sowohl die erste Differenz als auch die zweite Differenz des Unterträgers größer als oder gleich dem Quotienten des N-ten vorbestimmten Parameters ist, der N-te vorbestimmte Parameter ausgewählt wird, um die mit dem Index korrespondierende Anzahl von Filterabgriffen des Unterträgers zu sein.

8. Kanal-Schätzung-Verfahren gemäß Anspruch 2, **dadurch gekennzeichnet, dass** nach dem Schritt des Bestimmens, einen von den N vorgegebenen Parametern nicht auszuwählen, um die mit dem Index korrespondierende Anzahl von Filterabgriffen des Unterträgers zu sein, das Zeitfilterung-Ergebnis des Unterträgers direkt als Kanal-Schätzung-Wert des Unterträgers ausgegeben wird.

9. Kanal-Schätzung-Schaltkreis (7) in einem Empfänger eines OFDM-Systems zum Empfangen von Trägersignalen über eine Vielzahl von Unterträgern, wobei der Kanal-Schätzung-Schaltkreis aufweist:
einen Schätzung-Schaltkreis (70), welcher verwendet wird zum Erlangen eines anfänglichen Kanal-Schätzung-Ergebnisses von jeden Trägersignalen der Unterträger,
einen Zeitfilterung-Schaltkreis (71), welcher mit dem Schätzung-Schaltkreis gekoppelt ist und Zeitfiltern an den anfänglichen Kanal-Schätzung-Ergebnissen durchführt, um eine Vielzahl von Zeitfilterung-Ergebnissen der Trägersignale zu erlangen, welche mit den Unterträgern korrespondieren, und
einen Frequenzfilterung-Schaltkreis (72), welcher mit dem Zeitfilterung-Schaltkreis gekoppelt ist und die Unterträger in mindestens einen gültigen Bereich einteilt gemäß mindestens einem Null-Unterträger, welcher von den Unterträgern aufgewiesen wird, wobei die Unterträger erste Unterträger und zweite Unterträger aufweisen, wobei der gültige Bereich mit den ersten Unterträgern zum Übertragen der Trägersignale korrespondiert, während der Null-Unterträger mit den zweiten Unterträgern korrespondiert und nicht zum Übertragen von Trägersignalen verwendet wird,
**dadurch gekennzeichnet, dass**
der Frequenzfilterung-Schaltkreis (72) gemäß einem Index von jedem der Unterträger in dem gültigen Bereich bestimmt, ob einer von N vorbestimmten Parametern ausgewählt wird, um die mit dem Index korrespondierende Anzahl von Filterabgriffen für den Unterträger zu sein, und die Zeitfilterung-Ergebnisse im Frequenzbereich filtert gemäß den Filterabgriffen, um einen Kanal-Schätzung-Wert des Unterträgers zu erlangen, wobei der Index des Unterträgers einen Abstand zwischen dem Unterträger und einer Grenze des gültigen Bereichs widerspiegelt, wobei ein kleinerer vorbestimmter Parameter von den N vorbestimmten Parametern ausgewählt wird, um die Anzahl von Filterabgriffen für den Unterträger zu sein, wenn sich der Unterträger näher an der Grenze des gültigen Bereichs befindet, und wobei bestimmt wird, dass keiner von den N vorbestimmten Parametern ausgewählt wird, um die Anzahl von Filterabgriffen für den Unterträger zu sein, wenn sich der Unterträger am nächsten an der Grenze des gültigen Bereichs befindet,
wobei besagtes N eine Ganzzahl größer als 1 ist und die Indizes der Unterträger um 1 inkrementiert werden in Übereinstimmung mit der Reihenfolge der Unterträger in dem gültigen Bereich.

10. Kanal-Schätzung-Schaltkreis (7) gemäß Anspruch 9, **dadurch gekennzeichnet, dass** für jeden Unterträger des gültigen Bereichs der Frequenzfilterung-Schaltkreis (72) die folgenden Schritte durchführt, um gemäß dem Index von jedem der Unterträger in dem gültigen Bereich zu bestimmen, ob einer von N vorbestimmten Parametern ausgewählt wird, um die mit dem Index korrespondierende Anzahl von Filterabgriffen des Unterträgers zu sein:
Bestimmen für jeden Unterträger des gültigen Bereichs, ob sowohl eine erste Differenz zwischen dem Index des Unterträgers in dem gültigen Bereich und dem minimalen Index in dem gültigen Bereich als auch eine zweite Differenz zwischen dem maximalen Index in dem gültigen Bereich und dem Index des Unterträgers größer als oder gleich einem Grenzwert ist, wobei der Grenzwert ein Quotient des minimalen vorbestimmten Parameters von den N vorbestimmten Parametern geteilt durch 2 ist,
Bestimmen, einen von den N vorbestimmten Parametern nicht als die mit dem Index korrespondierende Anzahl von Filterabgriffen des Unterträgers auszuwählen, wenn nicht sowohl die erste Differenz als auch die zweite Differenz größer als oder gleich dem Grenzwert ist, und
Bestimmen, einen von den N vorgegebenen Parametern auszuwählen, um die mit dem Index korrespondierende Anzahl von Filterabgriffen des Unterträgers zu sein, wenn sowohl die erste Differenz als auch die zweite Differenz größer als oder gleich dem Grenzwert ist, und Erlangen des Kanal-Schätzung-Wertes des Unterträgers entsprechend der Anzahl von Filterabgriffen.

11. Kanal-Schätzung-Schaltkreis (7) gemäß Anspruch 10, **dadurch gekennzeichnet, dass** der Frequenzfilterung-Schaltkreis (72) den folgenden Schritt durchführt, um einen von den N vorbestimmten Parametern auszuwählen, um die mit dem Index korrespondierende Anzahl von Filterabgriffen des Unterträgers zu sein:
wenn der Index nicht größer als ein Median der Indizes in dem gültigen Bereich ist, ist, je größer der Index ist, der vorbestimmte Parameter desto größer, welcher mittels eines zweiten Berechnung-Schaltkreises ausgewählt wird, um die Filterabgriffe zu sein, und
wenn der Index größer als der Median ist, ist, je größer der Index ist, der vorbestimmte Parameter desto kleiner, welcher mittels eines zweiten Berechnung-Schaltkreises ausgewählt wird, um die Filterabgriffe zu sein.

12. Kanal-Schätzung-Schaltkreis (7) gemäß Anspruch 10, **dadurch gekennzeichnet, dass** der Frequenzfilter-Schalkreis (72) die folgenden Schritte durchführt, um einen von den N vorbestimmten Parametern auszuwählen, um die mit dem Index korrespondierende Anzahl von Filterabgriffen des Unterträgers zu sein:
Auswählen von K vorbestimmten Parametern aus den N vorbestimmten Parametern in aufsteigender Reihenfolge gemäß einer Stückzahl der Unterträger in dem gültigen Bereich, und Vergleichen der ersten Differenz des Unterträgers mit dem Quotienten von jedem der K vorbestimmten Parameter dividiert durch 2, wobei 1≤K≤N ist, und
Auswählen des *α*-tenvorbestimmten Parameters, um die mit dem Index korrespondierende Anzahl von Filterabgriffen des Unterträgers zu sein, wobei, wenn die erste Differenz des Unterträgers größer als oder gleich dem Quotienten des *α*-ten vorbestimmten Parameters von den K vorbestimmten Parametern ist und kleiner als der Quotient des (*α*+1)-ten vorbestimmten Parameters von den K vorbestimmten Parameter ist, oder
Auswählen des *α*-tenvorbestimmten Parameters, um die mit dem Index korrespondierende Anzahl von Filterabgriffen des Unterträgers zu sein, wenn die erste Differenz des Unterträgers größer als oder gleich dem Quotienten des *α*-ten vorbestimmten Parameters von den K vorbestimmten Parametern ist und kleiner als der Quotienten des (*α*+1)-ten vorbestimmten Parameters von den K Parametern ist, oder Auswählen des *α*-ten vorbestimmten Parameters, um die mit dem Index korrespondierende Anzahl von Filterabgriffen des Unterträgers zu sein, wenn die erste Differenz des Index größer als oder gleich der Stückzahl abzüglich des Quotienten des (*α*+1)-ten vorbestimmten Parameters ist und kleiner als die Stückzahl abzüglich des Quotienten des *α*-ten vorbestimmten Parameters ist, wobei 1≤α≤K-1,
wobei besagtes K=β ist, wenn die Stückzahl größer als oder gleich dem β-ten vorbestimmten Parameter von den N vorbestimmten Parametern ist und kleiner als der (β+1)-te vorbestimmte Parameter von den N vorbestimmten Parametern ist, wobei 1≤β≤N-1 ist, und wobei besagtes K=N ist, wenn die Stückzahl größer als oder gleich dem N-ten vorbestimmten Parameter ist.

13. Kanal-Schätzung-Schaltkreis (7) gemäß Anspruch 12, **dadurch gekennzeichnet, dass**, wenn die erste Differenz des Index größer als oder gleich dem Quotienten des K-ten vorbestimmten Parameters und kleiner als oder gleich der Stückzahl abzüglich des Quotienten des K-ten vorbestimmten Parameters in dem gültigen Bereich ist, der K-te vorbestimmte Parameter ausgewählt wird, um die mit dem Index korrespondierende Anzahl von Filterabgriffen des Unterträgers zu sein.

14. Kanal-Schätzung-Schaltkreis (7) gemäß Anspruch 10, **dadurch gekennzeichnet, dass** der Frequenzfilterung-Schaltkreis (72) die folgenden Schritte durchführt, um einen von den N vorbestimmten Parametern auszuwählen, um die mit dem Index korrespondierende Anzahl von Filterabgriffen des Unterträgers zu sein:
wenn sowohl die erste Differenz als auch die zweite Differenz des Unterträgers größer als oder gleich dem Quotienten des γ-ten vorbestimmten Parameters dividiert durch 2 ist und eine von der ersten Differenz und der zweiten Differenz kleiner als der Quotient des (γ+1)-ten vorbestimmten Parameters dividiert durch 2 ist, Auswählen des γ-ten vorbestimmten Parameters, um die mit dem Index korrespondierende Anzahl von Filterabgriffen des Unterträgers zu sein, wobei 1≤γ≤N-1, und wobei die N vorbestimmten Parameter in aufsteigender Reihenfolge angeordnet sind.

15. Kanal-Schätzung-Schaltkreis (7) gemäß Anspruch 14, **dadurch gekennzeichnet, dass**, wenn sowohl die erste Differenz als auch die zweite Differenz des Unterträgers größer als oder gleich dem Quotienten des N-ten vorbestimmten Parameters ist, der N-te Parameter ausgewählt wird, um die mit dem Index korrespondierende vorbestimmte Anzahl von Filterabgriffen des Unterträgers zu sein.

16. Kanal-Schätzung-Schaltkreis (7) gemäß Anspruch 10, **dadurch gekennzeichnet, dass** nach dem Schritt des Bestimmens, einen von den N vorbestimmten Parametern nicht auszuwählen, um die mit dem Index korrespondierende Anzahl von Filterabgriffen des Unterträgers zu sein, das Zeitfilterung-Ergebnis des Unterträgers direkt als der Kanal-Schätzung-Wert des Unterträgers ausgegeben wird.

## Revendications

1. Procédé d'estimation de canal dans un récepteur d'un système OFDM pour recevoir des signaux porteurs par une pluralité de sous-porteuses, le procédé d'estimation de canal comprenant les étapes suivantes consistant à :
obtenir un résultat d'estimation de canal initial pour chaque signal porteur des sous-porteuses, et filtrer les résultats d'estimation de canal initiaux dans le domaine temporel pour obtenir une pluralité de résultats de filtrage temporel des signaux porteurs correspondant aux sous-porteuses (S100),
diviser les sous-porteuses en au moins une section valide selon au moins une sous-porteuse nulle comprise dans les sous-porteuses (S110), les sous-porteuses comprenant des premières sous-porteuses et des deuxièmes sous-porteuses, où la section valide correspond aux premières sous-porteuses pour la transmission des signaux porteurs, tandis que la sous-porteuse nulle correspond aux deuxièmes sous-porteuses et n'est pas utilisée pour la transmission de signaux porteurs, et
**caractérisé**
**en ce que** l'on détermine, en fonction d'un indice de chacune des sous-porteuses dans la section valide, si l'un de N paramètres prédéterminés doit être sélectionné pour être le nombre de prises de filtre pour la sous-porteuse correspondant à l'indice, et que l'on filtre les résultats de filtrage temporel dans le domaine de fréquences en fonction des prises de filtre pour obtenir une valeur d'estimation de canal de la sous-porteuse (S120), où l'indice de la sous-porteuse reflète une distance entre la sous-porteuse et une limite de la section valide, un paramètre prédéterminé plus petit est sélectionné parmi lesdits N paramètres prédéterminés pour être le nombre de prises de filtre pour ladite sous-porteuse lorsque ladite sous-porteuse est plus proche de la limite de ladite section valide, et il est déterminé de ne sélectionner aucun desdits N paramètres prédéterminés pour être le nombre de prises de filtre pour ladite sous-porteuse lorsque la sous-porteuse est la plus proche de la limite de la section valide,
où ledit N est un nombre entier supérieur à 1 et les indices des sous-porteuses sont incrémentés par 1 conformément à l'ordre des sous-porteuses dans la section valide.

2. Procédé d'estimation de canal selon la revendication 1, **caractérisé en ce que** l'étape consistant à déterminer si l'un de N paramètres prédéterminés doit être sélectionné pour être le nombre de prises de filtre pour la sous-porteuse correspondant à l'indice selon l'indice de chacune des sous-porteuses dans la section valide comprend en outre les étapes suivantes consistant à :
pour chaque sous-porteuse dans la section valide, déterminer si une première différence entre l'indice de chacune des sous-porteuses dans la section valide et l'indice minimum dans la section valide et une deuxième différence entre l'indice maximum dans la section valide et l'indice de la sous-porteuse sont toutes les deux supérieures ou égales à une valeur limite, la valeur limite étant un quotient du paramètre minimum prédéterminé des N paramètres prédéterminés divisé par 2 (S300),
déterminer de ne sélectionner aucun des N paramètres prédéterminés pour être le nombre de prises de filtre de la sous-porteuse correspondant à l'indice lorsque la première différence et la deuxième différence toutes les deux ne sont pas supérieures ou égales à la valeur limite (S310), et
déterminer de sélectionner un des N paramètres prédéterminés pour être le nombre de prises de filtre de la sous-porteuse correspondant à l'indice lorsque la première différence et la deuxième différence sont toutes les deux supérieures ou égales à la valeur limite, et obtenir la valeur d'estimation de canal de la sous-porteuse en fonction du nombre de prises du filtre (S320).

3. Procédé d'estimation de canal selon la revendication 2, **caractérisé en ce que**, dans l'étape de sélection de l'un des N paramètres prédéterminés pour être les prises de filtre de la sous-porteuse correspondant à l'indice,
lorsque l'indice n'est pas supérieur à une médiane des indices dans la section valide, plus l'indice est élevé, plus le paramètre prédéterminé sélectionné pour les prises de filtre est grand, et
lorsque l'indice est supérieur à la médiane, plus l'indice est élevé, plus le paramètre prédéterminé sélectionné pour les prises de filtre est petit.

4. Procédé d'estimation de canal selon la revendication 2, **caractérisé en ce que** l'étape de sélection de l'un des N paramètres prédéterminés pour être le nombre de prises de filtre de la sous-porteuse correspondant à l'indice comprend en outre les étapes suivantes consistant à :
sélectionner K paramètres prédéterminés parmi les N paramètres prédéterminés en ordre croissant selon une quantité des sous-porteuses dans la section valide, et comparer la première différence de la sous-porteuse avec le quotient de chacun des K paramètres prédéterminés divisé par 2, où 1≤K≤N, et
sélectionner le α^{ième} paramètre prédéterminé pour être le nombre de prises de filtre de la sous-porteuse correspondant à l'indice lorsque la première différence de la sous-porteuse est supérieure ou égale au quotient du α^{ième} paramètre prédéterminé des K paramètres prédéterminés et est inférieure au quotient du (α+1)^{ième} paramètre prédéterminé des K paramètres prédéterminés, ou sélectionner le α^{ième} paramètre prédéterminé pour être le nombre de prises de filtre de la sous-porteuse correspondant à l'indice lorsque la première différence de l'indice est supérieure ou égale à la quantité soustrayant le quotient du (α+1)^{ième} paramètre prédéterminé et inférieure à la quantité soustrayant le quotient du α^{ième} paramètre prédéterminé, où 1≤α≤K-1,
où K=β lorsque la quantité est supérieure ou égale au β^{ième} paramètre prédéterminé dans les N paramètres prédéterminés et inférieure au (β+1)^{ième} paramètre prédéterminé des N paramètres prédéterminés, où 1≤β≤N-1, et K=N lorsque la quantité est supérieure ou égale au N^{ième} paramètre prédéterminé.

5. Procédé d'estimation de canal selon la revendication 4, **caractérisé en ce que**, lorsque la première différence de l'indice est supérieure ou égale au quotient du K^{ième} paramètre prédéterminé et inférieure ou égale à la quantité soustrayant le quotient du K^{ième} paramètre prédéterminé dans la section valide, le K^{ième} paramètre prédéterminé est sélectionné pour être le nombre de prises de filtre de la sous-porteuse correspondant à l'indice.

6. Procédé d'estimation de canal selon la revendication 2, **caractérisé en ce que** l'étape de sélection d'un des N paramètres prédéterminés pour être le nombre de prises de filtre de la sous-porteuse correspondant à l'indice comprend en outre une étape consistant à :
lorsque la première différence et la deuxième différence de la sous-porteuse sont toutes les deux supérieures ou égales au quotient du γi^{eme} paramètre prédéterminé divisé par 2 et l'une de la première différence et de la deuxième différence est inférieure au quotient du (γ+1)^{ième} paramètre prédéterminé divisé par 2, sélectionner le γ^{ième} paramètre prédéterminé pour être le nombre de prises de filtre de la sous-porteuse correspondant à l'indice, où 1≤γ≤N-1, et les N paramètres prédéterminés sont agencés en ordre croissant.

7. Procédé d'estimation de canal selon la revendication 6, **caractérisé en ce, que** lorsque la première différence et la deuxième différence de la sous-porteuse sont toutes les deux supérieures ou égales au quotient du Ni^{ème} paramètre prédéterminé, on sélectionne le N^{ième} paramètre prédéterminé pour être le nombre de prises de filtre de la sous-porteuse correspondant à l'indice.

8. Procédé d'estimation de canal selon la revendication 2, **caractérisé en ce que**, après l'étape consistant à déterminer de ne pas sélectionner un des N paramètres prédéterminés pour être le nombre de prises de filtrage de la sous-porteuse correspondant à l'indice, le résultat de filtrage temporel de la sous-porteuse est directement sorti pour être la valeur d'estimation de canal de la sous-porteuse.

9. Circuit d'estimation de canal (7) dans un récepteur d'un système OFDM pour recevoir des signaux porteurs par une pluralité de sous-porteuses, dans lequel le circuit d'estimation de canal comprenant :
un circuit d'estimation (70), utilisé pour obtenir un résultat d'estimation de canal initial de chaque signal porteur des sous-porteuses,
un circuit de filtrage temporel (71), couplé au circuit d'estimation et effectuant un filtrage temporel sur les résultats d'estimation de canal initial pour obtenir une pluralité de résultats de filtrage temporel des signaux porteurs correspondant aux sous-porteuses, et
un circuit de filtrage de fréquence (72) couplé au circuit de filtrage temporel et divisant les sous-porteuses en au moins une section valide selon au moins une sous-porteuse nulle comprise dans les sous-porteuses, les sous-porteuses comprenant des premières sous-porteuses et des deuxièmes sous-porteuses, où la section valide correspond aux premières sous-porteuses pour transmettre les signaux porteurs, tandis que la sous-porteuse nulle correspond aux deuxièmes sous-porteuses et n'est pas utilisée pour transmettre des signaux porteurs,
**caractérisé en ce que** le circuit de filtrage de fréquence (72) détermine en fonction d'un indice de chacune des sous-porteuses dans la section valide s'il faut sélectionner un de N paramètres prédéterminés pour être le nombre de prises de filtre pour la sous-porteuse correspondant à l'indice, et filtre les résultats de filtrage temporel dans le domaine de fréquence selon les prises de filtre pour obtenir une valeur d'estimation de canal de la sous-porteuse, où l'indice de la sous-porteuse reflète une distance entre la sous-porteuse et une limite de la section valide, un paramètre prédéterminé plus petit est sélectionné parmi les N paramètres prédéterminés pour être le nombre de prises de filtre pour la sous-porteuse lorsque la sous-porteuse est plus proche de la limite de la section valide, et il est déterminé de ne sélectionner aucun des N paramètres prédéterminés pour être le nombre de prises de filtre pour la sous-porteuse lorsque la sous-porteuse est la plus proche de la limite de la section valide,
où ledit N est un nombre entier supérieur à 1 et les indices des sous-porteuses sont incrémentés par 1 conformément à l'ordre des sous-porteuses dans la section valide.

10. Circuit d'estimation de canal (7) selon la revendication 9, **caractérisé en ce que**, pour chaque sous-porteuse de la section valide, le circuit de filtrage de fréquence (72) effectue les étapes suivantes pour déterminer, selon l'indice de chacune des sous-porteuses dans la section valide, si l'un des N paramètres prédéterminés doit être sélectionné pour être le nombre de prises de filtrage de la sous-porteuse correspondant à l'indice :
déterminer, pour chaque sous-porteuse de la section valide, si une première différence entre l'indice de la sous-porteuse dans la section valide et l'indice minimum dans la section valide et une deuxième différence entre l'indice maximum dans la section valide et l'indice de la sous-porteuse sont toutes les deux supérieures ou égales à une valeur limite, où la valeur limite est un quotient du paramètre prédéterminé minimum des N paramètres prédéterminés divisé par 2,
déterminer de ne sélectionner aucun des N paramètres prédéterminés pour être le nombre de prises de filtre de la sous-porteuse correspondant à l'indice, lorsque la première différence et la deuxième différence toutes les deux ne sont pas supérieures ou égales à la valeur limite, et
déterminer de sélectionner un des N paramètres prédéterminés pour être le nombre de prises de filtre de la sous-porteuse correspondant à l'indice lorsque la première différence et la deuxième différence sont toutes les deux supérieures ou égales à la valeur limite, et obtenir la valeur d'estimation de canal de la sous-porteuse selon le nombre de prises de filtre.

11. Circuit d'estimation de canal (7) selon la revendication 10, **caractérisé en ce que** le circuit de filtrage de fréquence (72) effectue l'étape suivante pour sélectionner l'un des N paramètres prédéterminés pour être le nombre de prises de filtre de la sous-porteuse correspondant à l'indice :
lorsque l'indice n'est pas supérieur à une médiane des indices dans la section valide, plus l'indice est élevé, plus le paramètre prédéterminé sélectionné par un deuxième circuit de calcul pour être les prises de filtre est grand, et
lorsque l'indice est supérieur à la médiane, plus l'indice est grand, plus le paramètre prédéterminé sélectionné par un deuxième circuit de calcul pour être les prises de filtre est petit.

12. Circuit d'estimation de canal (7) selon la revendication 10, **caractérisé en ce que** le circuit de filtrage de fréquence (72) effectue les étapes suivantes pour sélectionner un des N paramètres prédéterminés pour être le nombre de prises de filtre de la sous-porteuse correspondant à l'indice :
sélectionner K paramètres prédéterminés parmi les N paramètres prédéterminés en ordre croissant en fonction d'une quantité des sous-porteuses dans la section valide, et comparer la première différence de la sous-porteuse avec le quotient de chacun des K paramètres prédéterminés divisé par 2, où 1≤K≤N, et
sélectionner le α^{ième} paramètre prédéterminé pour être le nombre de prises de filtre de la sous-porteuse correspondant à l'indice lorsque la première différence de la sous-porteuse est supérieure ou égale au quotient du α^{ième} paramètre prédéterminé des K paramètres prédéterminés et est inférieure au quotient du (α+1)^{ième} paramètre prédéterminé des K paramètres prédéterminés, ou sélectionner le α^{ième} paramètre prédéterminé pour être le nombre de prises de filtre de la sous-porteuse correspondant à l'indice lorsque la première différence de l'indice est supérieure ou égale à la quantité soustrayant le quotient du (α+1)^{ième} paramètre prédéterminé et inférieure à la quantité soustrayant le quotient du α^{ième} paramètre prédéterminé, où 1≤α≤K-1,
où K=β lorsque la quantité est supérieure ou égale au β^{ième} paramètre prédéterminé dans les N paramètres prédéterminés et inférieure au (β+1)^{ième} paramètre prédéterminé des N paramètres prédéterminés, où 1≤β≤N-1, et K=N lorsque la quantité est supérieure ou égale au N^{ième} paramètre prédéterminé.

13. Circuit d'estimation de canal (7) selon la revendication 12, **caractérisé en ce que**, lorsque la première différence de l'indice est supérieure ou égale au quotient du K^{ième} paramètre prédéterminé et inférieure ou égale à la quantité soustrayant le quotient du K^{ième} paramètre prédéterminé dans la section valide, le K^{ième} paramètre prédéterminé est sélectionné pour être le nombre de prises de filtre de la sous-porteuse correspondant à l'indice.

14. Circuit d'estimation de canal (7) selon la revendication 10, **caractérisé en ce que** le circuit de filtrage de fréquence (72) effectue les étapes suivantes pour sélectionner l'un des N paramètres prédéterminés pour être le nombre de prises de filtre de la sous-porteuse correspondant à l'indice :
lorsque la première différence et la deuxième différence de la sous-porteuse sont toutes les deux supérieures ou égales au quotient du γi^{ème} paramètre prédéterminé divisé par 2 et l'une de la première différence et de la deuxième différence est inférieure au quotient du (γ+1)^{ième} paramètre prédéterminé divisé par 2, sélectionner le γ^{ième} paramètre prédéterminé pour être le nombre de prises de filtre de la sous-porteuse correspondant à l'indice, où 1≤γ≤N-1, et les N paramètres prédéterminés sont agencés en ordre croissant.

15. Circuit d'estimation de canal (7) selon la revendication 14, **caractérisé en ce que**, lorsque la première différence et la deuxième différence de la sous-porteuse sont toutes les deux supérieures ou égales au quotient du N^{ième} paramètre prédéterminé, le N^{ième} paramètre prédéterminé est sélectionné pour être le nombre de prises de filtre de la sous-porteuse correspondant à l'indice.

16. Circuit d'estimation de canal (7) selon la revendication 10, **caractérisé en ce que**, après l'étape consistant à déterminer de ne sélectionner aucun des N paramètres prédéterminés pour être le nombre de prises de filtre de la sous-porteuse correspondant à l'indice, le résultat de filtrage temporel de la sous-porteuse est directement sorti pour être la valeur d'estimation de canal de la sous-porteuse.
